# EUROPÄISCHE PATENTSCHRIFT

(11) **EP 2 880 335 B1**
(45) Veröffentlichungstag und Bekanntmachung des Hinweises auf die Patenterteilung: **18.01.2017**
(21) Anmeldenummer: 13742467.7
(22) Anmeldetag: 31.07.2013
(51) Int. Cl.: F16H 3/42, F16H 3/34, F16H 3/30

(54) **SCHALTGETRIEBE, DAS ZWISCHEN MINDESTENS DREI SCHALTSTUFEN UMSCHALTBAR IST**
TRANSMISSION WHICH CAN BE SWITCHED BETWEEN AT LEAST THREE SWITCHING STAGES
BOÎTE DE VITESSES POUVANT ADOPTER SÉLECTIVEMENT AU MOINS TROIS RAPPORTS

(30) Priorität: 01.08.2012 DE 202012007342 U
(43) Veröffentlichungstag der Anmeldung: 10.06.2015
(73) Patentinhaber: Helmut, Richter, 96185 Schönbrunn/Steigerwald (DE)
(72) Erfinder: Helmut, Richter, 96185 Schönbrunn/Steigerwald (DE)
(74) Vertreter: Kossak, Sabine
(86) Internationale Anmeldenummer: PCT/EP2013/066104
(87) Internationale Veröffentlichungsnummer: WO 2014/020074

(56) Entgegenhaltungen:
- WO-A1-2011/095348
- GB-A- 2 095 773
- US-A1- 2009 056 486

## Beschreibung

### TECHNISCHES GEBIET

Die Erfindung betrifft ein Schaltgetriebe, das zwischen mindestens drei Schaltstufen umschaltbar ist.

### HINTERGRUND DER ERFINDUNG

Im Stand der Technik sind Schaltgetriebe zur Verwendung in Fahrzeugen, Werkzeugmaschinen und Vorrichtungen aus vielen technischen Gebieten hinlänglich bekannt. Besonders verbreitet sind Zahnrad-Schaltgetriebe, die im Folgenden im Zuge der Beschreibung der Erfindung näher berücksichtigt werden.

Schaltgetriebe erlauben das Schalten durch Wechseln von Übersetzungsverhältnissen zwischen Zahnrädern, was zum Ändern von Drehzahl und Drehmoment führt. Bei Stirnradgetrieben sind eine Antriebs- und eine Abtriebswelle parallel zueinander angeordnet. Relativ einfache derartige Schaltgetriebe für Werkzeugmaschinen weisen mindestens eine Antriebsanordnung und eine Abtriebsanordnung auf, an denen Arbeitsräder in Form von Stirnrädern angeordnet sein könnten, wobei die Antriebsanordnung und die Abtriebsanordnung derart zueinander verschoben werden können, dass mindestens zwei unterschiedliche Paarungen von Arbeitsrädern herstellbar sind, die in Abhängigkeit von dem Durchmesser- und damit Zähnezahl-Verhältnis unterschiedliche Übersetzungen liefern.

Bei derartigen einfachen Schaltgetrieben ist erforderlich, ein das Schaltgetriebe beinhaltendes System vollständig abzubremsen und anzuhalten, so dass ohne Beschädigung der Arbeitsräder bei relativ zueinander bewegten Zähnen das Übersetzungsverhältnis durch eine Relativverschiebung der Antriebsanordnung und der Abtriebsanordnung geändert werden kann.

DE 20 2010 001 876 U1 offenbart ein Schaltgetriebe mit einer Antriebsanordnung, die ein erstes Arbeitsrad und ein zweites Arbeitsrad aufweist, zwischen denen bündig ein erstes als Kegelzahnrad ausgeführtes Schaltrad angeordnet ist. Eine Abtriebsanordnung weist ein drittes Arbeitsrad auf, das mit dem ersten oder zweiten Arbeitsrad in Eingriff bringbar ist. Eine Schaltvorrichtung bewegt das dritte Arbeitsrad derart, dass es mit dem ersten oder dem zweiten Arbeitsrad im Eingriff steht, so dass durch Bewegen des dritten Arbeitsrads ein Umschalten erfolgt.

WO 2011/095348 A1 zeigt ein Schaltgetriebe mit den Merkmalen des Oberbegriffs von Anspruch 1.

### ZUSAMMENFASSUNG DER ERFINDUNG

Das Anhalten eines Schaltgetriebes zum Umschalten der Geschwindigkeit einer Abtriebsanordnung ist nachteilig, da die an der Abtriebsanordnung angekoppelten angetriebenen trägen Massen abgebremst und nach dem Schaltvorgang wieder beschleunigt werden müssen. Besonders bei Werkzeugmaschinen, zum Beispiel eine Drehmaschine, bedeutet dies gleichermaßen eine Verringerung der Effektivität und damit der Produktivität sowie im Gegenzug eine Erhöhung der spezifischen Kosten eines auf der betreffenden Werkzeugmaschine hergestellte Produkts.

Die Verwendung eines Schaltgetriebes mit einem zwischen zwei Arbeitsrädern angeordneten Kegelzahnrads führt zu einer Schaltmöglichkeit lediglich zwischen zwei verschiedenen Geschwindigkeiten. Für weitere Schaltmöglichkeiten wären zusätzliche Kegelzahnräder und Arbeitsräder notwendig.

Es könnte dementsprechend als eine Aufgabe der Erfindung angesehen werden, ein Schaltgetriebe vorzuschlagen, das ein Umschalten zwischen drei oder mehr Geschwindigkeiten ohne die Notwendigkeit zusätzlicher Zahnräder und ohne die Notwendigkeit des Anhaltens eines Schaltgetriebes vor Schaltvorgängen erlaubt.

Eine weitere Aufgabe der Erfindung könnte darin liegen, ein derartiges Schaltgetriebe vorzuschlagen, das im Vergleich zu üblichen Schaltgetrieben keine oder nur in einem sehr geringen Maß erhöhte Komplexität aufweist.

Die vorangehend genannten Aufgaben werden durch ein Schaltgetriebe mit den Merkmalen des unabhängigen Schutzanspruchs 1 gelöst. Vorteilhafte Weiterbildungen sind den Unteransprüchen zu entnehmen.

Ein Schaltgetriebe gemäß der Erfindung weist einen Rahmen, in dem eine erste Arbeitswelle mit einem daran drehfest angeordneten ersten Zahnrad und eine zweite Arbeitswelle mit einem daran drehfest angeordneten zweiten Zahnrad mit parallel zueinander angeordneten Längsachsen drehbar gelagert sind und eine Schaltvorrichtung auf. Das erste Zahnrad ist zumindest bereichsweise kegelstumpfförmig mit einem ersten Ende und einem zweiten Ende mit unterschiedlichen Zähnezahlenausgestaltet und weist erste Hauptzähne auf, die sich vollständig von dem ersten Ende zu dem zweiten Ende des ersten Zahnrades hin erstrecken. Das zweite Zahnrad ist zumindest bereichsweise kegelstumpfförmig mit einem dritten Ende und einem vierten Ende mit unterschiedlichen Zähnezahlenausgestaltet und weist zweite Hauptzähne auf, die sich vollständig von dem dritten Ende zu dem vierten Ende des zweiten Zahnrades hin erstrecken. Die Schaltvorrichtung ist dazu eingerichtet, mindestens eines des ersten Zahnrades und des zweiten Zahnrades parallel und relativ zu dem jeweils anderen Zahnrad in eine erste, eine zweite und eine dritte Schaltposition zu verschieben, wobei in der ersten Schaltposition das erste Ende des ersten Zahnrades mit dem vierten Ende des zweiten Zahnrades im Eingriff steht, wobei in der zweiten Schaltposition das zweite Ende des ersten Zahnrades mit dem vierten Ende des zweiten Zahnrades im Eingriff steht und wobei in der dritten Schaltposition das zweite Ende des ersten Zahnrades mit dem dritten Ende des zweiten Zahnrades im Eingriff steht.

Der Rahmen des Schaltgetriebes ist als eine Einrichtung anzusehen, die die Komponenten des Schaltgetriebes trägt und die Installation in einem Fahrzeug oder einer Werkzeugmaschine erlaubt. Selbstverständlich kann der Rahmen auch ein integraler Bestandteil des übergeordneten Systems sein und muss nicht separat bereitgestellt sein.

Die erste Arbeitswelle kann eine Antriebswelle oder eine Abtriebswelle sein. Dies bedeutet, dass eine Antriebseinrichtung an der ersten Arbeitswelle angeordnet sein kann. Gleichermaßen wäre jedoch auch möglich, dass die erste Arbeitswelle mit einer anzutreibenden Komponente verbunden ist, etwa ein Rad, eine Kardanwelle, eine Propellerwelle oder dergleichen. Die zweite Arbeitswelle ist dementsprechend eine Abtriebswelle oder eine Antriebswelle, die über die ineinander greifenden Zahnräder angetrieben wird oder die erste Arbeitswelle antreibt.

Die zumindest in einem Bereich ausgeführte Kegelstumpfform weist ein erstes Ende und ein zweites Ende auf. Eines des ersten und des zweiten Endes weist einen kleineren Durchmesser auf als das jeweils andere Ende. Durch einen vorgegebenen Modul der Verzahnung ist die Anzahl der Zähne, die sich an dem Ende mit dem kleineren Durchmesser befinden, kleiner als die Anzahl der Zähne an dem anderen Ende. Die Hauptzähne erstrecken sich dabei vollständig oder unterbrochen von dem ersten Ende zu dem zweiten Ende, wobei weitere Zähne an dem Ende mit dem größeren Durchmesser angeordnet sein können, die in den Zahngrund verlaufen. Die bereichsweise Kegelstumpfform schließt nicht aus, dass das erste und das zweite Zahnrad jeweils vollständig kegelförmig sind, andererseits ist auch denkbar, dass die Kegelstumpfform an beiden Enden um jeweils einen zylindrischen Zahnradabschnitt verlängert wird, dessen Durchmesser konstant bleibt und bündig mit dem daran angeordneten Ende der Kegelstumpfform anschließt. Gleiches gilt für die Ausgestaltung des zweiten Zahnrades mit einem dritten Ende und einem vierten Ende.

Die Schaltvorrichtung dient dazu, den eigentlichen Schaltvorgang auszuführen. Hierzu wird eine Relativverschiebung des ersten und des zweiten Zahnrades zueinander durchgeführt, bevorzugt entlang bzw. parallel zu den Längsachsen der ersten Arbeitswelle und der zweiten Arbeitswelle. Damit kann erfindungsgemäß eine von drei unterschiedlichen Schaltpositionen erreicht werden. In der ersten Schaltposition bildet das erste Ende des ersten Zahnrades, welches etwa einen geringeren Durchmesser aufweist, als das zweite Ende des ersten Zahnrades, einen Eingriff mit dem vierten Ende des zweiten Zahnrades im Eingriff steht, das beispielsweise einen größeren Durchmesser aufweist als das dritte Ende des zweiten Zahnrades. Ist die erste Arbeitswelle als eine Antriebswelle ausgeführt, kann hierdurch die höchstmögliche Übersetzung realisiert werden, so dass die erste Schaltposition einen ersten Gang des erfindungsgemäßen Schaltgetriebes darstellt. In der zweiten Schaltposition bildet das zweite Ende des ersten Zahnrades mit dem vierten Ende des zweiten Zahnrades einen Eingriff. Die Übersetzung ist aufgrund des größeren Durchmessers des zweiten Endes des ersten Zahnrades und des gleichgebliebenen wirksamen Durchmessers des zweiten Zahnrades etwas geringer als in der ersten Schaltposition. Schließlich bildet in der dritten Schaltposition das zweite Ende des ersten Zahnrades mit dem dritten Ende des zweiten Zahnrades einen Eingriff. Durch den gleich gebliebenen wirksamen Durchmesser des ersten Zahnrades und des geringer gewordenen wirksamen Durchmessers des zweiten Zahnrades ist das Übersetzungsverhältnis noch geringer geworden, so dass die dritte Schaltposition einen dritten Gang bildet. Ist die erste Arbeitswelle eine Abtriebswelle, ist die Reihenfolge der Schaltpositionen genau umgekehrt. Dieser Aufbau weist deutliche Vorteile gegenüber konventionellen Schaltgetrieben auf, die auf Kombinationen von Stirnrädern basieren, welche zum Erreichen unterschiedlicher Übersetzungsverhältnisse stets abgebremst oder synchronisiert werden müssen und weiterhin einen deutlich größeren Bauraum beanspruchen. Durch die Verwendung von abschnittsweise kegelstumpfförmig ausgeführten Zahnrädern kann eine vereinfachte Schaltung erreicht werden, bei der das jeweils antreibende oder angetriebene Zahnrad entlang der Hauptzähne des jeweils anderen Zahnrades rutscht und ein Ende dieses anderen Zahnrades erreicht, welches abweichend verzahnt ist. Die Drehung der Zahnräder muss dabei nicht unterbrochen werden, denn der Schaltvorgang umfasst eine stetige Verzahnung und führt damit zu einer kontinuierlichen Weiterdrehung der Zahnräder. Der realisierte Bauraum ist demnach deutlich kompakter als bei konventiellen Schaltgetrieben.

In einer vorteilhaften Ausführungsform sind das erste Ende und das zweite Ende des ersten Zahnrades und das dritte Ende und das vierte Ende des zweiten Zahnrades abschnittsweise zylindrisch ausgeführt. Damit werden Bereiche an den Zahnrädern derart ausgeführt, dass dort ein störungsfreier und über längere Zeit reibungsloser Eingriff der Zahnräder stattfinden kann. In den drei Schaltpositionen greifen dabei stets nur zylindrische Abschnitte ineinander, wobei während des Schaltvorgangs der jeweilige zylindrische Abschnitt entlang der Hauptzähne in den jeweils gegenüber liegenden zylindrischen rutscht und hierbei die Rotationsgeschwindigkeit anpasst.

In einer vorteilhaften Ausführungsform weist mindestens eines des ersten Zahnrades und des zweiten Zahnrades mindestens einen Zwischenzahn auf, der zwischen zwei Hauptzähnen angeordnet ist und eine Flankenlinie und eine Fußlinie aufweist, wobei die Flankenlinie zumindest bereichsweise nicht parallel zu der Fußlinie verläuft und sich der Fußlinie annähert. Ein Zwischenzahn ist demnach ein Zahn, der seine vollständige Höhe nur an einem Ende des jeweiligen Zahnrades aufweist. Da die Zahnräder bereichsweise kegelstumpfförmig sind und für eine gleichbleibende Verzahnungsqualität den gleichen Modul aufweisen müssen, ist erforderlich, dass einige überzählige Zähne von dem Ende mit dem größeren Durchmesser zu dem Ende mit dem kleineren Durchmesser verschwinden. Hierzu nähert sich eine Flankenlinie des mindestens einen Zwischenzahns der Fußlinie an. In einer vorteilhaften Ausführungsform schneiden sich die Flankenlinie und die Fußlinie in einem Punkt. Damit wird an zumindest einem Punkt die Höhe des Zwischenzahns Null, d.h. er verläuft im Grund des jeweiligen Zahnrades. An dieser Stelle ergibt sich ein Freiraum, der Schaltkonflikte dadurch vermeiden kann, dass sich Zähne eines Zahnrades beim Verrutschen in den Zähnen des anderen Zahnrades stellenweise ohne Zahnkontakt bewegen können, um unterschiedliche Zähnezahlen ausgleichen zu können.

Erfindungsgemäß ist mindestens ein Hauptzahn zumindest teilweise unterbrochen. Dadurch werden Schaltkonflikte vermieden und eine Relativbewegung von einem Ende zu einem anderen Ende eines der beiden Zahnräder wird deutlich erleichtert, da ein Durchrutschen eines Hauptzahns oder eines Zwischenzahns bei einer sich ändernden Anzahl von Zähnen erlaubt und ein Klemmen vermieden wird.

Gleichmaßen kann das zweite Zahnrad mindestens einen Zwischenzahn aufweisen, der zwischen zwei Hauptzähnen angeordnet ist, der sich nicht vollständig von dem dritten Ende zu dem vierten Ende erstreckt und an einer dem dritten Ende entgegengesetzten Seite in den Grund des zweiten Zahnrads läuft.

In einer vorteilhaften Ausführungsform sind nicht alle Hauptzähne des ersten und/oder zweiten Zahnrades parallel zu einer Längsachse des jeweiligen Zahnrades ausgeführt. Damit sind Hauptzähne des ersten oder zweiten Zahnrades schräg angeordet, was zu einer höheren Kraftübertragung und einem geräuschärmeren Getriebe führt. Die schräge Ausführung der Hauptzähne kann derart ausgeführt werden, dass zwei Hauptzähne eine Art Trichterform in radialer Richtung bilden. Damit wird weiterhin der Freiraum zwischen den Hauptzähnen vergrößert bzw. für das Vermeiden von Schaltkonflikten verbessert.

In einer vorteilhaften Ausführungsform weist das erste Zahnrad an dem ersten Ende eine geringere Zähnezahl auf, als an dem zweiten Ende. Das Eingreifen des ersten Endes des ersten Zahnrades mit einem Ende des zweiten Zahnrades bedeutet stets ein größeres Übersetzungsverhältnis als beim Eingreifen des zweiten Endes des ersten Zahnrades mit einem Ende des zweiten Zahnrades.

In einer vorteilhaften Ausführungsform weist das zweite Zahnrad an dem dritten Ende eine geringere Zähnezahl auf, als am vierten Ende. Damit wird die vorangehend geschilderte Verschaltung mit den abfallenden Übersetzungsverhältnissen von der ersten zu der dritten Schaltposition realisiert.

Besonders vorteilhaft ist, wenn die kegelstumpfförmigen Abschnitte des ersten und des zweiten Zahnrades parallel zueinander ausgerichtet sind.

Die dadurch entstehenden Mantelflächen der Zahnräder erlauben eine gleichmäßige Verzahnungsqualität und Haltbarkeit. In einer weiter vorteilhaften Ausführungsform ist an dem Rahmen ein um eine zur Längsachse der ersten Arbeitswelle schwenkbar gelagerter Halterahmen angeordnet, an dem die zweite Arbeitswelle drehbar um die Längsachse gelagert ist. Dadurch wird ein abweichender radialer Abstand zwischen dem ersten und dem zweiten Zahnrad erlaubt, so dass die unterschiedlichen Schaltpositionen angefahren werden können.

### KURZE BESCHREIBUNG DER ZEICHNUNGEN

Weitere Merkmale, Vorteile und Anwendungsmöglichkeiten der vorliegenden Erfindung ergeben sich aus der nachfolgenden Beschreibung des Ausführungsbeispiels und den Figuren. Dabei bilden alle beschriebenen und/oder bildlich dargestellten Merkmale für sich und in jeder Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
Fig. 1a, Fig. 1b und Fig. 1c zeigen das erfindungsgemäße Schaltgetriebe in zwei unterschiedlichen Seitenansichten (1b und 1 c) sowie in einer isometrischen Darstellung (1 a), wobei sich das erfindungsgemäße Schaltgetriebe in einer zweiten Schaltposition befindet.
Fig. 2a, Fig. 2b, 2c, 2d und 2e zeigen exemplarisch ein Zahnrad in einer Drei-Seiten-Ansicht (2a-2c) und in zwei isometrischen Ansichten.

### DETAILLIERTE BESCHREIBUNG EXEMPLARISCHER AUSFÜHRUNGSBEISPIELE

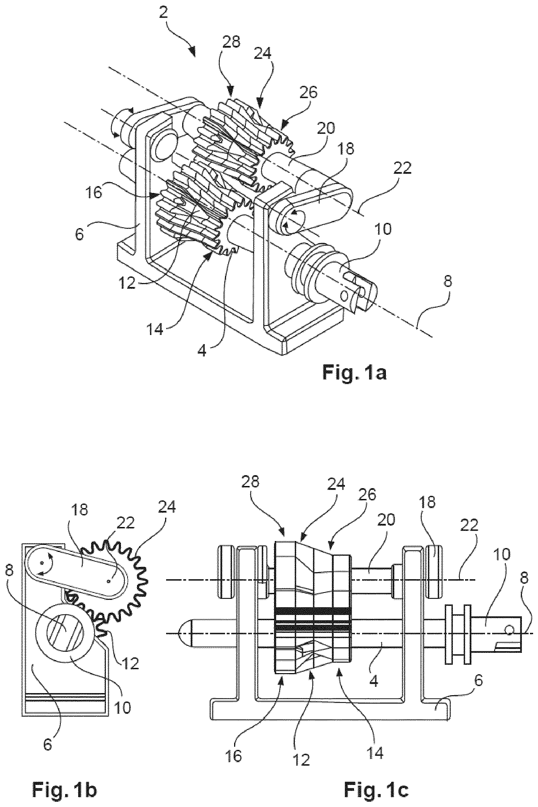

Fig. 1 a zeigt ein erfindungsgemäßes Schaltgetriebe 2 in einer isometrischen Ansicht. Das Schaltgetriebe 2 weist eine erste Arbeitswelle 4 auf, die in einem Rahmen 6 drehbar um eine Längsachse 8 gelagert ist. Die erste Arbeitswelle 4 ist exemplarisch als eine Antriebswelle ausgeführt, die mit einem als Gabel ausgeführten Flansch 10 mit einer Antriebsvorrichtung verbindbar ist. An der ersten Arbeitswelle 4 ist drehfest über eine Welle-Nabe-Verbindung ein erstes Zahnrad 12 angeordnet, welches in einem mittleren Abschnitt kegelstumpfförmig ausgeführt ist und ein erstes Ende 14 und ein zweites Ende 16 aufweist, die beide zylindrisch ausgeformt sind. Das erste Ende 14 weist eine kleinere Zähnezahl auf als das zweite Ende 16, wobei jedoch das Modul an beiden Enden 14 und 16 identisch sind, um das Eingreifen von Zahnrädern mit dem gleichen Modul sowohl am ersten Ende 14 als auch am zweiten Ende 16 zu gewährleisten.

Schwenkbar an dem Rahmen 6 ist ein Halterahmen 18 angeordnet, an dem eine zweite Arbeitswelle 20 drehbar um eine Längsachse 22 gelagert ist und etwa die Funktion einer Abtriebswelle aufweist. An der zweiten Arbeitswelle 20 ist ein zweites Zahnrad 24 drehfest gelagert. Das zweite Zahnrad 24 weist ebenfalls in einem mittleren Abschnitt eine Kegelstumpfform auf, an die sich ein drittes Ende 26 und ein viertes Ende 28 anschließen, die ebenfalls zylindrisch ausgeformt sind und beide das gleiche Modul aufweisen wie das erste Ende 14 und das zweite Ende 16 des ersten Zahnrades 12.

Das erfindungsgemäße Schaltgetriebe 2 kann mit diesem Aufbau drei unterschiedliche Übersetzungsverhältnisse einnehmen, indem das erste Zahnrad 12 und das zweite Zahnrad 24 relativ zueinander parallel zu den Längsachsen 8 und 22 verschoben werden, so dass das erste Ende 14, das zweite Ende 16, das dritte Ende 26 und das vierte Ende 28 des ersten Zahnrades 12 bzw. des zweiten Zahnrades 24 unterschiedliche Eingriffspaare bilden können.

In einer ersten Schaltposition, die das höchste Übersetzungsverhältnis bildet, greift etwa das erste Ende 14 des ersten Zahnrads 12 in das vierte Ende 28 des zweiten Zahnrades 24 ein. Damit wird, vorausgesetzt, die erste Arbeitswelle 4 ist eine Antriebswelle, mit einer relativ kleinen Zähnezahl die zweite Arbeitswelle 20 mit einer relativ großen Zähnezahl angetrieben. Lediglich beispielhaft könnte das erste Ende 14 insgesamt 16 Zähne aufweisen, während das zweite Ende 16 insgesamt 20 Zähne aufweist. Das zweite Zahnrad 24 könnte der Einfachheit halber identisch mit dem ersten Zahnrad 12 ausgestaltet sein, so dass sich in der ersten Schaltposition ein Übersetzungsverhältnis von 16:20 einstellt.

In einer zweiten Schaltposition sind die Zahnräder 12 und 24 derart zueinander verschoben, dass sie genau miteinander fluchten. Das zweite Ende 16 des ersten Zahnrades 12 gerät dabei mit dem vierten Ende 28 des zweiten Zahnrades 24 in Eingriff. Diese Variante ist in Fig. 1a und Fig. 1c explizit dargestellt. Demnach wird in dieser Schaltposition ein Übersetzungsverhältnis von 1:1 erreicht.

In einer weiteren, dritten Schaltposition, bei der die Zahnräder 12 und 24 derart verschoben sind, dass das zweite Ende 16 des ersten Zahnrades 12 mit dem dritten Ende 26 des zweiten Zahnrades 24 in Eingriff gerät, wird ein Übersetzungsverhältnis von 20:16 gebildet.

Da die Fußkreisdurchmesser in den unterschiedlichen Schaltpositionen voneinander abweichen ist eine Kompensationsbewegung des Halterahmens 18 notwendig. Dieser kann durch eine ausreichend starke Feder- oder durch eine Kulissensteuerung erreicht werden, so dass stets sichergestellt wird, dass ein korrekter Eingriff zwischen den Zahnrädern herrscht, ohne dass Zahnflanken des einen Zahnrades den Zahngrund des anderen Zahnrades berühren.

Besonders vorteilhaft bei dem gezeigten Schaltgetriebe 2 ist die Tatsache, dass der geringe Bauraum und der Bedarf von lediglich zwei Zahnrädern dennoch ausreichen, um drei Schaltstufen zu ermöglichen.

Fig. 1b stellt in einer Seitendarstellung deutlich, dass der Halterahmen 18 für den korrekten Eingriff des Zahnradpaars verantwortlich ist und unterschiedliche notwendige Abstände der Längsachsen 8 und 22 zueinander ausgleicht.

Fig. 1c demonstriert anschaulich die Parallelität der Längsachsen 8 und 22 der ersten Arbeitswelle 4 und der zweiten Arbeitswelle 20 sowie exakt die relative Positionierung der beiden Zahnräder 12 und 24 in der zweiten Schaltposition.

Um die erste Schaltposition erreichen zu können ist gemäß der Annahme, dass die erste Arbeitswelle 4 eine Antriebswelle ist, das erste Zahnrad 12 nach links zu verschieben oder das zweite Zahnrad 24 nach rechts, so dass das erste Ende 14 des ersten Zahnrades 12 mit dem vierten Ende 28 des zweiten Zahnrades 24 einen Eingriff bilden kann. Zur Erreichung der dritten Schaltposition müsste folglich das erste Zahnrad 12 nach rechts oder das zweite Zahnrad 24 nach links verschoben werden, so dass das zweite Ende 16 des ersten Zahnrades 12 mit dem dritten Ende 26 des zweiten Zahnrades 24 einen Eingriff bildet.

Es ist verständlich, dass eine hier nicht gezeigte Schaltvorrichtung dazu eingerichtet ist, die Relativbewegung der Zahnräder 12 und 24 zueinander durchzuführen, etwa durch eine Kulissenführung, einen pneumatischen oder hydraulischen Aktuator, ein Stellgetriebe mit einem elektrischen Antrieb oder dergleichen. Weiterhin ist vorstellbar, dass sowohl eine Bewegung des ersten Zahnrades 12 als auch des zweiten Zahnrades 24 erfolgen kann.

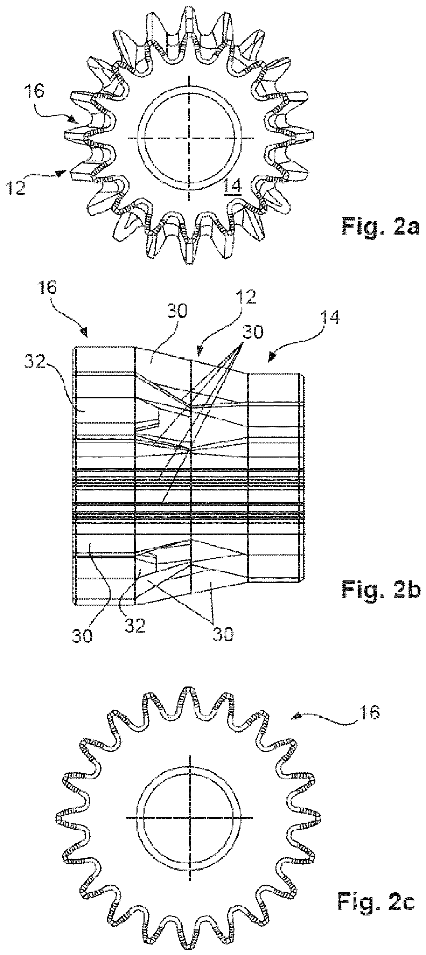

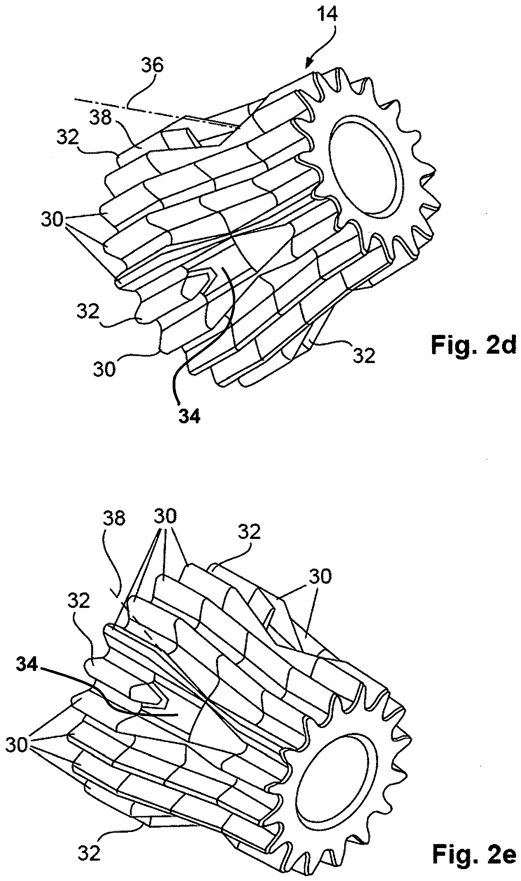

Fig. 2a, 2b und 2c zeigen exemplarisch ein erstes Zahnrad 12 in einer Drei-Seiten-Ansicht. Fig. 2a zeigt hierbei eine Draufsicht auf das erste Ende 14 und lässt erkennen, dass das dahinter angeordnete zweite Ende 16 vier Zähne mehr besitzt. Diese Differenz kann dadurch erreicht werden, dass das erste Zahnrad 12 Hauptzähne 30 aufweist, zwischen denen Zwischenzähne 32 angeordnet sind. Diese sind bevorzugt symmetrisch über den gesamten Umfang verteilt und enden in dem kegelstumpfförmigen Bereich des ersten Zahnrads 12, der sich zwischen dem ersten Ende 14 und dem zweiten Ende 16 befindet. Dadurch werden Freiräume 34 zum Zahnausgleich geschaffen.

Zusätzlich kann durch bereichsweise Unterbrechungen der direkt benachbarten Hauptzähne 30 der Freiraum 34 ein sanftes Eingleiten der Zähne des jeweils anderen Zahnrades auf die Haupt- oder Zwischenzähne 30 bzw. 32 erlauben. Damit werden auch schnelle Bewegungen der Zähne 12 und 24 entlang der Längsachsen 8 und 22 der Arbeitswelle 4 und 20 erlaubt.

Die Unterbrechungen der Hauptzähne können durch Annähern von Flankenlinien 36 an Fußlinien 38 der betreffenden Hauptzähne 30 erzielt werden. Dies kann sowohl von dem ersten Ende 14 zu dem zweiten Ende 16 erfolgen und umgekehrt.

### BEZUGSZEICHENLISTE

- 2: Schaltgetriebe
- 4: erste Arbeitswelle
- 6: Rahmen
- 8: Längsachse
- 10: Flansch
- 12: erstes Zahnrad
- 14: erstes Ende
- 16: zweites Ende
- 18: Halterahmen
- 20: zweite Arbeitswelle
- 22: Längsachse
- 24: zweites Zahnrad
- 26: drittes Ende
- 28: viertes Ende
- 30: Hauptzahn
- 32: Zwischenzahn
- 34: Freiraum
- 36: Flankenlinie
- 38: Fußlinie

## Patentansprüche

1. Schaltgetriebe (2), aufweisend
einen Rahmen (6), in dem eine erste Arbeitswelle (4) mit einem daran drehfest angeordneten ersten Zahnrad (12) und eine zweite Arbeitswelle (20) mit einem daran drehfest angeordneten zweiten Zahnrad (24) mit parallel zueinander angeordneten Längsachsen (8, 22) drehbar gelagert sind und
eine Schaltvorrichtung,
wobei das erste Zahnrad (12) zumindest bereichsweise kegelstumpfförmig mit einem ersten Ende (14) und einem zweiten Ende (16) ausgestaltet ist und erste Hauptzähne (30) aufweist, die sich vollständig von dem ersten Ende (14) zu dem zweiten Ende (16) des ersten Zahnrades (12) hin erstrecken, wobei weitere Zähne an dem Ende mit dem größeren Durchmesser angeordnet sind,
wobei das zweite Zahnrad (24) zumindest bereichsweise kegelstumpfförmig mit einem dritten Ende (26) und einem vierten Ende (28) ausgestaltet ist und zweite Hauptzähne (30) aufweist, die sich vollständig von dem dritten Ende (26) zu dem vierten Ende (28) des zweiten Zahnrades (24) hin erstrecken, wobei weitere Zähne an dem Ende mit dem größeren Durchmesser angeordnet sind,
wobei die Schaltvorrichtung dazu eingerichtet ist, mindestens eines des ersten Zahnrades (12) und des zweiten Zahnrades (24) parallel und relativ zu dem jeweils anderen Zahnrad (12, 24) in eine erste, eine zweite und eine dritte Schaltposition zu verschieben, wobei in der ersten Schaltposition das erste Ende (14) des ersten Zahnrades (12) mit dem vierten Ende (28) des zweiten Zahnrades (24) im Eingriff steht, wobei in der zweiten Schaltposition das zweite Ende (16) des ersten Zahnrades (12) mit dem vierten Ende (28) des zweiten Zahnrades (24) im Eingriff steht und wobei in der dritten Schaltposition das zweite Ende (16) des ersten Zahnrades (12) mit dem dritten Ende (26) des zweiten Zahnrades (24) im Eingriff steht, **dadurch gekennzeichnet, dass** mindestens ein Hauptzahn zumindest teilweise unterbrochen ist.

2. Schaltgetriebe (2) nach Anspruch 1, **dadurch gekennzeichnet, dass** das erste Ende (14) und das zweite Ende (16) des ersten Zahnrades (12) und das dritte Ende (26) und das vierte Ende (28) des zweiten Zahnrades (24) abschnittsweise zylindrisch ausgeführt sind.

3. Schaltgetriebe (2) nach Anspruch 1 oder 2, **dadurch gekennzeichnet, dass** mindestens eines des ersten Zahnrades (12) und des zweiten Zahnrades (24) mindestens einen Zwischenzahn (32) aufweist, der zwischen zwei Hauptzähnen (30) angeordnet ist, eine Flankenlinie (36) und eine Fußlinie(38) aufweist, wobei die Flankenlinie (36) zumindest bereichsweise nicht parallel zu der Fußlinie(38) verläuft und sich der Fußlinie(38) annähert.

4. Schaltgetriebe (2) nach Anspruch 3, **dadurch gekennzeichnet, dass**sich die Flankenlinie (36) und die Fußlinie(38) in einem Punkt schneiden.

5. Schaltgetriebe (2) nach einem der vorhergehenden Ansprüche, **dadurch gekennzeichnet, dass** das erste Zahnrad (12) mindestens einen Zwischenzahn (32) aufweist, der zwischen zwei Hauptzähnen (30) angeordnet ist, der sich nicht vollständig von dem ersten Ende (14) zu dem zweiten Ende (16) erstreckt und an einer dem ersten Ende (14) entgegengesetzten Seite in den Grund des ersten Zahnrads (12) läuft.

6. Schaltgetriebe (2) nach einem der vorhergehenden Ansprüche, **dadurch gekennzeichnet, dass** das zweite Zahnrad (24) mindestens einen Zwischenzahn (32) aufweist, der zwischen zwei Hauptzähnen (30) angeordnet ist, der sich nicht vollständig von dem dritten Ende (26) zu dem vierten Ende (28) erstreckt und an einer dem dritten Ende (26) entgegengesetzten Seite in den Grund des zweiten Zahnrads (24) läuft.

7. Schaltgetriebe (2) nach einem der vorhergehenden Ansprüche, **dadurch gekennzeichnet, dass** das erste Zahnrad (12) an dem ersten Ende (14) eine größere Zähnezahl aufweist, als am zweiten Ende (16).

8. Schaltgetriebe (2) nach einem der vorhergehenden Ansprüche, **dadurch gekennzeichnet, dass** das zweite Zahnrad (24) an dem dritten Ende (26) eine größere Zähnezahl aufweist, als am vierten Ende (28).

9. Schaltgetriebe (2) nach einem der vorhergehenden Ansprüche, **dadurch gekennzeichnet, dass** die kegelstumpfförmigen Abschnitte des ersten Zahnrades (12) und des zweiten Zahnrades (24) parallel zueinander ausgerichtet sind.

10. Schaltgetriebe (2) nach einem der vorhergehenden Ansprüche, **dadurch gekennzeichnet, dass** an dem Rahmen (6) ein um eine zur Längsachse (8) der ersten Arbeitswelle (4) schwenkbar gelagerter Halterahmen (18) angeordnet, an dem die zweite Arbeitswelle (20) drehbar um ihre Längsachse (22) gelagert ist.

## Claims

1. A transmission (2) having
a frame (6) in which a first drive shaft (4) with a first gear (12) non-rotatably mounted thereon and a second drive shaft (20) with a second gear (24) non-rotatably mounted thereon, having longitudinal axes (8, 22) disposed in parallel to one another, are rotatably mounted, and
a switching device,
wherein the first gear (12) is configured at least in regions as a truncated cone with a first end (14) and a second end (16) and has first main teeth (30) which extend completely from the first end (14) to the second end (16) of the first gear (12), wherein additional teeth are disposed at the end with the larger diameter,
wherein the second gear (24) is configured at least in regions as a truncated cone with a third end (26 and a fourth end (28) and has second main teeth (30) which extend completely from the third end (26) to the fourth end (28) of the second gear, wherein additional teeth are disposed at the end with the larger diameter,
wherein the switching device is designed to displace at least one of the first gear (12) and the second gear (24) in parallel and relative to the respective other gear (12, 24) into a first, a second, and a third switching position, wherein in the first switching position, the first end (14) of the first gear (12) is engaged with fourth end (28) of the second gear (24), wherein in the second switching position, the second end (16) of the first gear (12) is engaged with the fourth end (28) of the second gear (24), and wherein in the third switching position, the second end (16) of the first gear (12) is engaged with the third end (26) of the second gear (24),
**characterized in that** at least one main tooth is at least partially interrupted.

2. The transmission (2) according to Claim 1, **characterized in that** the first end (14) and the second end (16) of the first gear (12) and the third end (26) and the fourth end (28) of the second gear (24) are designed cylindrically in sections.

3. The transmission (2) according to Claim 1 or 2, **characterized in that** at least one of the first gear (12) and the second gear (24) has at least one intermediate tooth (32) which is arranged between two main teeth (30) and has a flank line (36) and a root line (38), wherein the flank line (36) runs non-parallel to the root line (38) at least in regions and approaches the root line (38).

4. The transmission (2) according to Claim 3, **characterized in that** the flank line (36) and the root line (38) intersect at a point.

5. The transmission (2) according to one of the preceding claims, **characterized in that** the first gear (12) has at least one intermediate tooth (32) arranged between two main teeth (30) and which does not extend completely from the first end (14) to the second end (16) and runs into the base of the first gear (12) on a side opposite the first end (14).

6. The transmission (2) according to one of the preceding claims, **characterized in that** the second gear (24) has at least one intermediate tooth (32) arranged between two main teeth (30) and which does not extend completely from the third end (26) to the fourth end (28) and runs into the base of the second gear (24) on a side opposite the third end (26).

7. The transmission (2) according to one of the preceding claims, **characterized in that** the first gear (12) has a larger number of teeth at the first end (14) than at the second end (16).

8. The transmission (2) according to one of the preceding claims, **characterized in that** the second gear (24) has a larger number of teeth on the third end (26) than on the fourth end (28).

9. The transmission (2) according to one of the preceding claims, **characterized in that** the truncated cone sections of the first gear (12) and of the second gear (24) are aligned in parallel to one another.

10. The transmission (2) according to one of the preceding claims, **characterized in that** a holding frame (18), on which the second drive shaft (20) is mounted to be rotatable about its longitudinal axis (22), is disposed on the frame (6) and is pivotable about the longitudinal axis (8) of the first drive shaft (4).

## Revendications

1. Boîte de vitesses (2), présentant
un cadre (6), dans lequel un premier arbre de travail (4), doté d'une première roue dentée (12) disposée de façon solidaire en rotation sur celui-ci, et un deuxième arbre de travail (20), doté d'une deuxième roue dentée (24) disposée de façon solidaire en rotation sur celui-ci, sont montés avec possibilité de rotation, avec des axes longitudinaux (8, 22) disposés parallèlement l'un à l'autre, et
un dispositif de changement de rapports,
sachant que la première roue dentée (12) est réalisée, au moins par portions, sous une forme tronconique, avec une première extrémité (14) et une deuxième extrémité (16), et présente des premières dents principales (30) qui s'étendent complètement de la première extrémité (14) jusqu'à la deuxième extrémité (16) de la première roue dentée (12), des dents supplémentaires étant disposées à l'extrémité de plus grand diamètre,
sachant que la deuxième roue dentée (24) est réalisée, au moins par portions, sous une forme tronconique, avec une troisième extrémité (26) et une quatrième extrémité (28), et présente des deuxièmes dents principales (30) qui s'étendent complètement de la troisième extrémité (26) jusqu'à la quatrième extrémité (28) de la deuxième roue dentée (24), des dents supplémentaires étant disposées à l'extrémité de plus grand diamètre,
sachant que le dispositif de changement de rapports est conçu pour déplacer au moins l'une des roues parmi la première roue dentée (12) et la deuxième roue dentée (24), parallèlement et respectivement par rapport à l'autre roue dentée (12, 24), dans une première, une deuxième et une troisième position de manoeuvre, sachant que dans la première position de manoeuvre, la première extrémité (14) de la première roue dentée (12) est en prise avec la quatrième extrémité (28) de la deuxième roue dentée (24), sachant que dans la deuxième position de manoeuvre, la deuxième extrémité (16) de la première roue dentée (12) est en prise avec la quatrième extrémité (28) de la deuxième roue dentée (24), et sachant que dans la troisième position de manoeuvre, la deuxième extrémité (16) de la première roue dentée (12) est en prise avec la troisième extrémité (28) de la deuxième roue dentée (24),
**caractérisée en ce qu**'au moins une dent principale est interrompue au moins en partie.

2. Boîte de vitesses (2) selon la revendication 1, **caractérisée en ce que** la première extrémité (14) et la deuxième extrémité (16) de la première roue dentée (12) et la troisième extrémité (26) et la quatrième extrémité (28) de la deuxième roue dentée (24) sont réalisées par portions de façon cylindrique.

3. Boîte de vitesses (2) selon la revendication 1 ou 2, **caractérisée en ce qu**'au moins une roue parmi la première roue dentée (12) et la deuxième roue dentée (24) présente au moins une dent intermédiaire (32) qui est disposée entre deux dents principales (30), présente une ligne de flanc (36) et une ligne de pied (38), où la ligne de flanc (36) ne s'étend pas parallèlement à la ligne de pied (38), au moins par portions, et s'approche de la ligne de pied (38).

4. Boîte de vitesses (2) selon la revendication 3, **caractérisée en ce que** la ligne de flanc (36) et la ligne de pied (38) se coupent en un point.

5. Boîte de vitesses (2) selon l'une des revendications précédentes, **caractérisée en ce que** la première roue dentée (12) présente au moins une dent intermédiaire (32) qui est disposée entre deux dents principales (30), qui ne s'étend pas complètement de la première extrémité (14) jusqu'à la deuxième extrémité (16) et entre dans le fond de la première roue dentée (12) sur un côté opposé à la première extrémité (14).

6. Boîte de vitesses (2) selon l'une des revendications précédentes, **caractérisée en ce que** la deuxième roue dentée (24) présente au moins une dent intermédiaire (32) qui est disposée entre deux dents principales (30), qui ne s'étend pas complètement de la troisième extrémité (26) jusqu'à la quatrième extrémité (28) et entre dans le fond de la deuxième roue dentée (24) sur un côté opposé à la troisième extrémité (26).

7. Boîte de vitesses (2) selon l'une des revendications précédentes, **caractérisée en ce que,** sur la première extrémité (14), la première roue dentée (12) présente un nombre de dents qui est supérieur à celui sur la deuxième extrémité (16).

8. Boîte de vitesses (2) selon l'une des revendications précédentes, **caractérisée en ce que,** sur la troisième extrémité (26), la deuxième roue dentée (24) présente un nombre de dents qui est supérieur à celui sur la quatrième extrémité (28).

9. Boîte de vitesses (2) selon l'une des revendications précédentes, **caractérisée en ce que** les parties tronconiques de la première roue dentée (12) et de la deuxième roue dentée (24) sont orientées parallèlement les unes aux autres.

10. Boîte de vitesses (2) selon l'une des revendications précédentes, **caractérisée en ce que** sur le cadre (6), est disposé un cadre de support (18) qui est monté avec possibilité de pivotement autour d'un axe longitudinal (8) du premier arbre de travail (4) et sur lequel le deuxième arbre de travail (20) est monté avec possibilité de rotation autour de son axe longitudinal (22).
